# EUROPÄISCHE PATENTSCHRIFT

(11) **EP 3 957 518 B1**
(45) Veröffentlichungstag und Bekanntmachung des Hinweises auf die Patenterteilung: **09.10.2024**
(21) Anmeldenummer: 21191827.1
(22) Anmeldetag: 18.08.2021
(51) Int. Cl.: B60M 1/28, G01B 11/00, G01S 17/42, G01S 17/88

(54) **VERFAHREN UND VORRICHTUNG ZUM ERMITTELN DER FAHRDRAHTPOSITION**
METHOD AND DEVICE FOR DETERMINING THE POSITION OF A OVERHEAD LINE CONTACT WIRE
PROCÉDÉ ET DISPOSITIF DE DÉTERMINATION DE LA POSITION D'UN FIL DE CATÉNAIRE

(30) Priorität: 21.08.2020 AT 507052020
(43) Veröffentlichungstag der Anmeldung: 23.02.2022
(73) Patentinhaber: European Trans Energy GmbH, 1100 Wien (AT)
(72) Erfinder: Winter, Hubert, 8811 Scheifling (AT)
(74) Vertreter: Puchberger & Partner Patentanwälte

(56) Entgegenhaltungen:
- EP-A1- 3 392 605
- EP-B1- 0 511 191
- US-A1- 2015 124 239

## Beschreibung

Die vorliegende Erfindung betrifft ein Verfahren und eine Vorrichtung zum Ermitteln der Lage eines Fahrdrahts für Schienenfahrzeuge gemäß den unabhängigen Patentansprüchen.

Im Stand der Technik sind unterschiedliche Verfahren zur Ermittlung der Lage eines Fahrdrahts bekannt. Derartige Verfahren und dazu geeignete Vorrichtungen werden eingesetzt, um die Höhe und die Seitenlage des Fahrdrahts von Schienenanlagen regelmäßig zu kontrollieren. Um eine möglichst genaue Bestimmung der relevanten Parameter des Fahrdrahts zu ermöglichen, müssen unterschiedliche Variablen in Betracht gezogen werden, zu deren Messung unterschiedliche Einrichtungen notwendig sind. Zu diesen Parametern zählen unter anderem der Seiten- und Höhenversatz der zur Messung eingesetzten Messvorrichtung.

Werden zur Messung mehrerer Parameter unterschiedliche Messeinrichtungen eingesetzt, ist üblicherweise eine aufwändige Abstimmung der einzelnen Einrichtungen aufeinander erforderlich. Überdies ergeben sich durch den Einsatz mehrerer Messeinrichtungen unterschiedliche Fehler- und Defektquellen.

Zur Bestimmung der Lage von Fahrdrähten sind im Stand der Technik beispielsweise statische Laserquellen bekannt. Diese machen jedoch eine anfängliche manuelle Ausrichtung des Laserstrahls auf den Fahrdraht erforderlich, was den Arbeitsfluss hemmen und zu weiteren Fehlerquellen führen kann.

Ein System, das die Verwendung eines "Mobile Mapping System", also eines dreidimensionalen Laserscanners umfasst, wird in der EP3392605A1 beschrieben. Ein derartiges System liefert als Messdaten eine Anhäufung von Punkten mit dreidimensionalen Koordinatenwerten, wodurch ein dreidimensionales Abbild eines Raumes ermittelt werden kann. Derartige Messungen erfolgen jedoch an diskreten Messpunkten und sie produzieren eine große Menge an Datenpunkten.

In der US2015124239A1 wird ein System zur Positionsmessung eines Fahrdrahtes beschrieben, bei dem unter Zuhilfenahme von Kamerabildern die Positionierung eines Distanzmessungs-Lasers erfolgt.

Es ist daher eine Aufgabe der vorliegenden Erfindung, die Nachteile des Standes der Technik zu überwinden und ein Verfahren und eine Vorrichtung zu schaffen, die in der Lage sind, mehrere zur Bestimmung von Fahrdrahtparametern erforderliche Parameter zu bestimmen und die bevorzugt keine manuelle Ausrichtung auf den Fahrdraht erfordert.

Diese Aufgabe wird durch ein Verfahren und eine Vorrichtung gemäß den unabhängigen Patentansprüchen gelöst.

Die vorliegende Erfindung betrifft ein Verfahren zum Ermitteln der Lage eines Fahrdrahts für Schienenfahrzeuge mit einer schienengeführten Messvorrichtung. Das Verfahren umfasst gegebenenfalls die folgenden Schritte:
- Aussenden eines Laserstrahls von einem Aussendepunkt einer Sendeeinrichtung,
- Messen der Reflexion des Laserstrahls mit einer Empfangseinrichtung und dadurch Erfassen einer Position des Fahrdrahts sowie einer Position von wenigstens zwei Schienenmesspunkten auf gegenüberliegenden Schienen,
- Einspeisen der erfassten Positionen in eine Datenverarbeitungsanlage und Ermitteln des Seitenversatzes und/oder des Höhenversatzes der Messvorrichtung auf Basis der Position der Schienenmesspunkte und
- Berechnen mittels der Datenverarbeitungsanlage des Fahrdrahtversatzes und/oder der Fahrdrahthöhe unter Verwendung des Seitenversatzes und/oder des Höhenversatzes.

Durch die Erfassung der Schienenmesspunkte und des Fahrdrahtes mit einer einzigen Sende- bzw. Empfangsvorrichtung wird die Anzahl der erforderlichen Messeinrichtungen reduziert. Die Berechnung der einzelnen Positionen zueinander ist insbesondere mit grundlegenden mathematischen Operationen über geometrische Zusammenhänge möglich.

Der Seitenversatz des Messwagens bzw. des Aussendepunkts des Laserstrahls ist insbesondere der Abstand zwischen der Schienenmitte und dem Schnittpunkt der Normalen zwischen dem Aussendepunkt und der Schienenebene. Gegebenenfalls ist der Seitenversatz des Messwagens bzw. des Aussendepunkts des Laserstrahls der horizontale Abstand zwischen Aussendepunkt und Schienenmitte.

Der Höhenversatz des Messwagens bzw. des Aussendepunkts des Laserstrahls ist insbesondere der Normalabstand des Aussendepunkts zur Schienenebene. Gegebenenfalls ist der Höhenversatz des Messwagens bzw. des Aussendepunkts des Laserstrahls der vertikale Abstand zwischen Aussendepunkt und Schienenebene.

Die Begriffe horizontal und vertikal beziehen sich in Zusammenhang mit dem Seiten- und Höhenversatz insbesondere auf die Schienenebene als Bezugsebene. "Horizontal" bedeutet gegebenenfalls "parallel zur Schienenebene" und "vertikal" bedeutet gegebenenfalls "orthogonal zur Schienenebene".

Die Schienenebene ist insbesondere gebildet durch die Berührende der Schienenköpfe von zwei gegenüberliegenden Schienen.

Bevorzugt ist die Gerade, die die Schienenmesspunkte verbindet parallel zur Schienenebene angeordnet oder sie liegt auf der Schienenebene. Gegebenenfalls können die Schienenmesspunkte an unterschiedlichen Positionen gegenüberliegender Schienen liegen. In diesem Fall ist die Verbindende der beiden Schienenmesspunkte nicht parallel zur Schienenebene. Durch Kenntnis der Position der Schienenmesspunkte kann jedoch mittels der Datenverarbeitungsanlage auf die Lage der Schienenebene rückgerechnet werden.

Die Fahrdrahthöhe ist insbesondere der Normalabstand zwischen Schienenebene und Fahrdraht.

Der Fahrdrahtversatz ist insbesondere der vertikale Abstand zwischen der Fahrdrahtposition und der Schienenmitte. Gegebenenfalls ist der Fahrdrahtversatz der

Abstand zwischen der Schienenmitte und dem Schnittpunkt der Normalen zwischen dem Fahrdraht und der Schienenebene.

Die Schienenmitte ist insbesondere der geometrische Mittelpunkt zwischen zwei Schienen.

Ein Schienenmesspunkt ist insbesondere ein bestimmter Punkt am äußeren Profil einer Schiene. Bevorzugt sind die beiden Schienenmesspunkte an gleichen Positionen gegenüberliegender Schienen angeordnet. In diesem Fall ist eine durch die Schienenmesspunkte laufende Gerade im Wesentlichen parallel zur Schienenebene. Gegebenenfalls können die Schienenmesspunkte auch an unterschiedlichen Positionen gegenüberliegender Schienen angeordnet sein.

Der Fahrdraht kann gegebenenfalls eine stromführende Oberleitung, ein Tragseil oder eine beliebige andere draht- oder seilförmige Einrichtung sein. Insbesondere ist der Fahrdraht über den Schienen angeordnet.

Gegebenenfalls umfasst das erfindungsgemäße Verfahren das Bestimmen des Abstands zwischen Aussendepunkt und Fahrdraht, zwischen Aussendepunkt und einem ersten Schienenmesspunkt auf einer ersten Schiene, und zwischen Aussendepunkt und einem zweiten Schienenmesspunkt auf einer zweiten Schiene, wobei die zweite Schiene der ersten Schiene gegenüberliegend angeordnet ist. Gegebenenfalls umfasst das Verfahren das Bestimmen der Schienenebene durch Berechnung einer Geraden, die durch die beiden Schienenmesspunkte verläuft.

Erfindungsgemäß ist vorgesehen, dass die Messvorrichtung mit einer Vorschubgeschwindigkeit über die Schienen bewegt wird, und dass die Verfahrensschritte kontinuierlich durchgeführt und wiederholt werden, sodass ein Verlauf des Fahrdrahtversatzes und/oder der Fahrdrahthöhe entlang der Vorschubrichtung erhalten wird. Dadurch wird die Aufzeichnung eines kontinuierlichen Profils möglich.

Erfindungsgemäß ist vorgesehen, dass die Sendeeinrichtung einen Laserstrahl aussendet, der um eine entlang der Vorschubrichtung verlaufende Achse rotiert. Die Ausbreitungsrichtung des Laserstrahls verläuft dabei insbesondere im Wesentlichen orthogonal zur Vorschubrichtung und/oder zur Rotationsachse. Dadurch wird die Umgebung der Messvorrichtung im Wesentlichen kreisförmig abgetastet. Durch den Vorschub der Vorrichtung ergibt sich ein spiralförmiges Abtastprofil, wobei zur Vereinfachung angenommen werden kann, dass sich alle abgetasteten Punkte während einer Rotation des Laserstrahls auf einer planen Ebene befinden. Insbesondere können die Parameter Rotationsgeschwindigkeit, Vorschubgeschwindigkeit und Abtastrate bzw. Anzahl der Messpunkte pro Umdrehung entsprechend angepasst werden.

Durch den rotierenden Laserstrahl kann ein bestimmter Winkelbereich abgerastert werden, sodass die Position des Fahrdrahts automatisch erkannt wird. Dadurch ist keine manuelle Vorpositionierung des Lasers erforderlich.

Gegebenenfalls ist vorgesehen, dass durch das Messen der Reflexion des Laserstrahls mit der Empfangseinrichtung ferner eines oder mehrere Konstruktionselemente erfasst wird/werden. Das Konstruktionselement kann gegebenenfalls eine Stützeinrichtung, beispielsweise ein Tragmast des Fahrdrahts, sein. Das Konstruktionselement kann gegebenenfalls eine Wand einer baulichen Einrichtung, beispielsweise eine Tunnelwand, sein. Das Konstruktionselement kann gegebenenfalls ein Schienenfundament, beispielsweise das Profil eines Bahndamms, sein.

Gegebenenfalls ist vorgesehen, dass mittels der Datenverarbeitungsanlage der Abstand zwischen dem Konstruktionselement und dem Fahrdraht bestimmt wird.

Gegebenenfalls ist vorgesehen, dass der Abstand zwischen dem Konstruktionselement und dem Fahrdraht der Horizontalabstand zwischen dem Konstruktionselement und dem Fahrdraht ist. Der Horizontalabstand ist insbesondere der Abstand zwischen dem Fahrdraht und dem nächstliegenden Punkt am Konstruktionselement in horizontaler Richtung.

Gegebenenfalls ist vorgesehen, dass der Abstand zwischen dem Konstruktionselement und dem Fahrdraht ein Abstand zwischen einem Tragmast und dem Fahrdraht ist. Gegebenenfalls ist vorgesehen, dass der Abstand zwischen dem Konstruktionselement und dem Fahrdraht ein Abstand zwischen einer Tunnelwand und dem Fahrdraht ist.

Gegebenenfalls ist vorgesehen, dass auf Basis der Position der zwei Schienenmesspunkte mittels der Datenverarbeitungsanlage ein Schienenabstand bestimmt wird. Der Schienenabstand ist insbesondere der Abstand zwischen zwei gegenüberliegenden Schienen. Der Schienenabstand kann insbesondere auf Basis des Verhältnisses zwischen Aussendepunkt des Laserstrahls und den Schienenmesspunkten bestimmt werden.

Gegebenenfalls ist vorgesehen, dass der Schienenabstand mittels der Datenverarbeitungsanlage gegebenenfalls mit einem Soll-Schienenabstand verglichen wird. Bei Über- oder Unterschreiten eines Grenzwerts kann ein Warnhinweis ausgegeben werden.

Gegebenenfalls ist vorgesehen, dass das Verfahren ferner das Bestimmen der Neigung α der Schienenebene durch Messen der Neigung der Messvorrichtung, insbesondere gegenüber einer Horizontalebene, umfasst. Besonders in Kurvenabschnitten sind Schienen üblicherweise überhöht und weisen dadurch eine Neigung im Vergleich zu einer Horizontalebene auf. Dies bedeutet, dass die Schienenebene einen Neigungswinkel zur Horizontalebene aufweist. Wenn die Schienenebene geneigt ist, ist der Abstand des Fahrdrahts zum Boden üblicherweise kleiner als die gemessene Fahrdrahthöhe. Durch Messung der Neigung kann diese Abweichung gegebenenfalls korrigiert werden.

Gegebenenfalls ist vorgesehen, dass die gemessene Neigung α der Schienenebene zum Berechnen des Horizontalabstands zwischen dem Fahrdraht und einem Konstruktionselement verwendet wird. Insbesondere werden für diese Berechnung die gemessene Fahrdrahthöhe, der Fahrdrahtversatz sowie die Neigung α verwendet.

Gegebenenfalls ist vorgesehen, dass zum Berechnen des Fahrdrahtversatzes der Abstand des Schnittpunkts der Normalen zwischen Fahrdraht und einer Schienenebene und einer Schienenmitte, gegebenenfalls korrigiert um den Seitenversatz der Messvorrichtung bestimmt wird.

Gegebenenfalls ist vorgesehen, dass zum Berechnen der Fahrdrahthöhe der Normalabstand zwischen dem Fahrdraht und einer Schienenebene, gegebenenfalls korrigiert um den Höhenversatz der Messvorrichtung, bestimmt wird. Gegebenenfalls wird zum Berechnen der Fahrdrahthöhe der Fahrdrahtversatz, der Höhenversatz und der Abstand und/oder die Position des Fahrdrahts verwendet.

Gegebenenfalls ist vorgesehen, dass mehrere, gegebenenfalls zwischen 2 und 20, nebeneinander liegende Messpunkte gemittelt werden. Gegebenenfalls kann ein arithmetisches Mittel gebildet werden. Gegebenenfalls können zwischen 2 und 10 nebeneinander liegende Messpunkte gemittelt werden.

Gegebenenfalls ist vorgesehen, dass durch die Datenverarbeitungsanlage aus dem Seitenversatz und gegebenenfalls der Neigung α ein Kollisionspunkt zwischen einem erfassten Konstruktionselement und einem Fahrzeugprofil ermittelt wird. Dadurch kann bestimmt werden, ob ein Schienenfahrzeug mit einer bestimmten Außengeometrie ungefährdet eine vermessene Schienenstrecke passieren kann.

Gegebenenfalls betrifft die Erfindung eine Messvorrichtung zur Ausführung eines erfindungsgemäßen Verfahrens, wobei die Messvorrichtung eine Sendeeinrichtung, eine Empfangseinrichtung und eine Datenverarbeitungsanlage umfasst. Gegebenenfalls betrifft die Erfindung eine Messvorrichtung zum Ermitteln der Lage eines Fahrdrahts für Schienenfahrzeuge, wobei die Messvorrichtung schienengeführt ist und folgende Elemente umfasst:
- eine Sendeeinrichtung ausgebildet zum Aussenden eines Laserstrahls ausgehend von einem Aussendepunkt,
- eine Empfangseinrichtung ausgebildet zum Messen der Reflexion des Laserstrahls und zum Erfassen einer Position des Fahrdrahts sowie zum Erfassen einer Position von wenigstens zwei Schienenmesspunkten auf gegenüberliegenden Schienen,
- eine Datenverarbeitungsanlage ausgebildet zum Empfangen der erfassten Positionen sowie zum Ermitteln des Seitenversatzes und/oder des Höhenversatzes der Messvorrichtung auf Basis der Position der Schienenmesspunkte, und zum Berechnen des Fahrdrahtversatzes und/oder der Fahrdrahthöhe unter Verwendung des Seitenversatzes und/oder des Höhenversatzes.

Gegebenenfalls ist vorgesehen, dass die Vorrichtung ferner einen Neigungssensor umfasst.

Erfindungsgemäß ist vorgesehen, dass die Sendeeinrichtung eine Laserquelle umfasst, die dazu ausgebildet ist, einen rotierenden Laserstrahl auszusenden. Insbesondere verläuft die Ausbreitungsrichtung des Laserstrahls im Wesentlichen orthogonal zur Rotationsachse.

Gegebenenfalls ist vorgesehen, dass die Vorrichtung an einem Messwagen angeordnet ist, der manuell oder motorgetrieben über die Schienen bewegbar ist, oder dass die Vorrichtung an einem Schienenfahrzeug anordenbar ist. Der Messwagen kann eine eigenständige Messvorrichtung bilden. Ist die Messvorrichtung an einem Schienenfahrzeug anordenbar, kann diese an einem bestehenden Fahrzeug, beispielsweise einem Waggon oder einem Triebwagen, angebracht werden und wird durch dieses Fahrzeug über die Schienen bewegt.

Die Messvorrichtung ist insbesondere auf zwei Schienen geführt. Die Empfangseinrichtung ist insbesondere dazu ausgebildet, die räumliche Position und die Distanz eines den Laserstrahl reflektierenden Punktes zu erfassen.

Weitere Merkmale der Erfindung ergeben sich aus der Beschreibung der Ausführungsbeispiele, den Figuren sowie aus den Patentansprüchen.

Nachfolgend wird die vorliegende Erfindung anhand von exemplarischen Ausführungsbeispielen im Detail erläutert. Diese Beispiele dienen lediglich der Veranschaulichung der Erfindung und sollen den Schutzbereich der Patentansprüche nicht einschränken.

Es zeigen:
Fig. 1 eine schematische Vorderansicht einer erfindungsgemäßen Messvorrichtung auf Schienen, angeordnet unter einem Fahrdraht gemäß einem ersten Ausführungsbeispiel,
Fig. 2 eine Detailansicht der Messvorrichtung aus Fig. 1,
Fig. 3 eine seitliche Ansicht der Messvorrichtung aus Fig. 1,
Fig. 4 eine Detailansicht einer Messvorrichtung gemäß einem zweiten Ausführungsbeispiel mit Seitenversatz,
Fig. 5 eine Detailansicht einer Messvorrichtung gemäß einem dritten Ausführungsbeispiel mit Neigung,
Fig. 6 eine Detailansicht einer Messvorrichtung gemäß einem vierten Ausführungsbeispiel mit zusätzlicher Erfassung des Profils eines Bahndamms,
Fig. 7 eine schematische Ansicht eines Schienenabschnitts mit einem Fahrzeugprofil gemäß einem fünften Ausführungsbeispiel.

In allen Ausführungsbeispielen und Figuren bezeichnen gleiche Bezugszeichen gleiche Teile oder Elemente, sofern nicht anders angegeben.

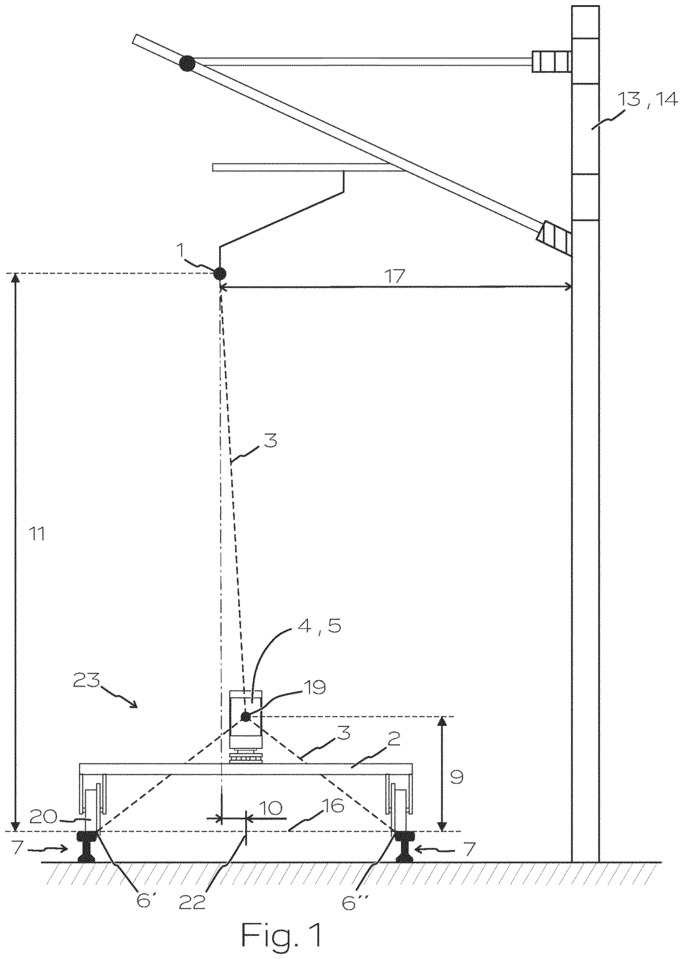

Fig. 1 zeigt eine schematische Vorderansicht einer erfindungsgemäßen Messvorrichtung 2 auf zwei gegenüberliegenden Schienen 7 gemäß einem ersten Ausführungsbeispiel. Ein Fahrdraht 1 verläuft über den Schienen 7 bzw. über der Messvorrichtung 2. Der Fahrdraht 1 wird von einem Element 13 gehalten, das in diesem Beispiel als Tragmast 14 ausgeführt ist.

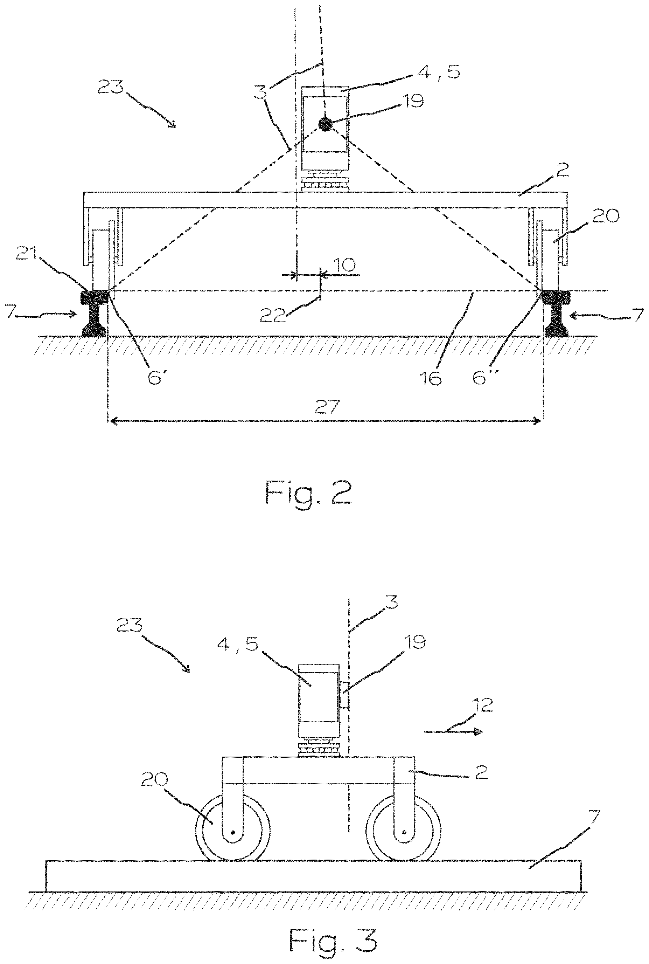

Fig. 2 zeigt eine Detailansicht der Messvorrichtung 2 aus Fig. 1 und Fig. 3 zeigt eine seitliche Ansicht der Messvorrichtung aus Fig. 1. Da die Fig. 1-3 dasselbe Ausführungsbeispiel zeigen, werden die gezeigten Elemente in einer gemeinsamen Beschreibung erläutert.

Die Messvorrichtung 2 ist auf einem Messwagen 23 angeordnet, der vier Räder 20 umfasst, die auf den Schienen 7 bzw. auf den Schienenköpfen 21 aufliegen. Von der Messvorrichtung 2 getragen werden eine Sendeeinrichtung 4 und eine Empfangseinrichtung 5, die hier als eine gemeinsame Einrichtung ausgeführt sind. In diese Einrichtung integriert ist ferner eine Datenverarbeitungsanlage (nicht gezeigt), die Mittel zur Verarbeitung der gemessenen Daten umfasst. Die Datenverarbeitungsanlage kann beispielsweise ein Computer sein.

Die Sendeeinrichtung 4 ist dazu ausgeführt einen Laserstrahl 3 auszusenden. Der Laserstrahl 3 tritt an einem Aussendepunkt 19 aus der Sendeeinrichtung 4 aus. Während der Messung wird die Messvorrichtung 2 entlang der Vorschubrichtung 12 über die Schienen 7 bewegt. Dies kann manuell oder motorgetrieben erfolgen. Der Laserstrahl 3 rotiert um eine Achse, die im Wesentlichen parallel zur Vorschubrichtung 12 verläuft. Dadurch wird eine spiralförmige Abtastfläche gebildet, die durch die Bewegung der Messvorrichtung 2 kontinuierlich verschoben wird.

Trifft der Laserstrahl 3 auf einen lichtundurchlässigen Gegenstand, wird das Licht reflektiert. Der reflektierte Laserstahl 3 kann durch die Empfangseinrichtung 5 detektiert werden. Dadurch ist die Bestimmung der Lage und der Entfernung von Punkten relativ zum Aussendepunkt 19 des Laserstrahls 3 möglich.

In diesem Ausführungsbeispiel werden die Positionen von zumindest drei Punkten erfasst, nämlich der Position des Fahrdrahts, der Position eines ersten Schienenmesspunkts 6' und der Position eines zweiten Schienenmesspunkts 6". Die beiden Schienenmesspunkte 6', 6" befinden sich auf gegenüberliegenden Schienen 7 und entsprechen äquivalenten Punkten auf den beiden Schienen 7. In diesem Beispiel sind die Schienenmesspunkte 6', 6" jeweils die innenliegenden oberen Kanten der Schienenköpfe 21. Die Verbindende der Schienenmesspunkte 6', 6" liegt im Wesentlichen auf der Schienenebene 16.

Die Verbindung der beiden Schienenmesspunkte 6', 6" liegt auf der Schienenebene 16. Aus dem bekannten Abstand zwischen den Schienenmesspunkten 6', 6" und den gemessenen Abständen zwischen dem Aussendepunkt 19 und den Schienenmesspunkten 6', 6" kann sowohl der Seitenversatz 8 der Messvorrichtung 2 als auch der Höhenversatz 9 der Messvorrichtung 2 bestimmt werden.

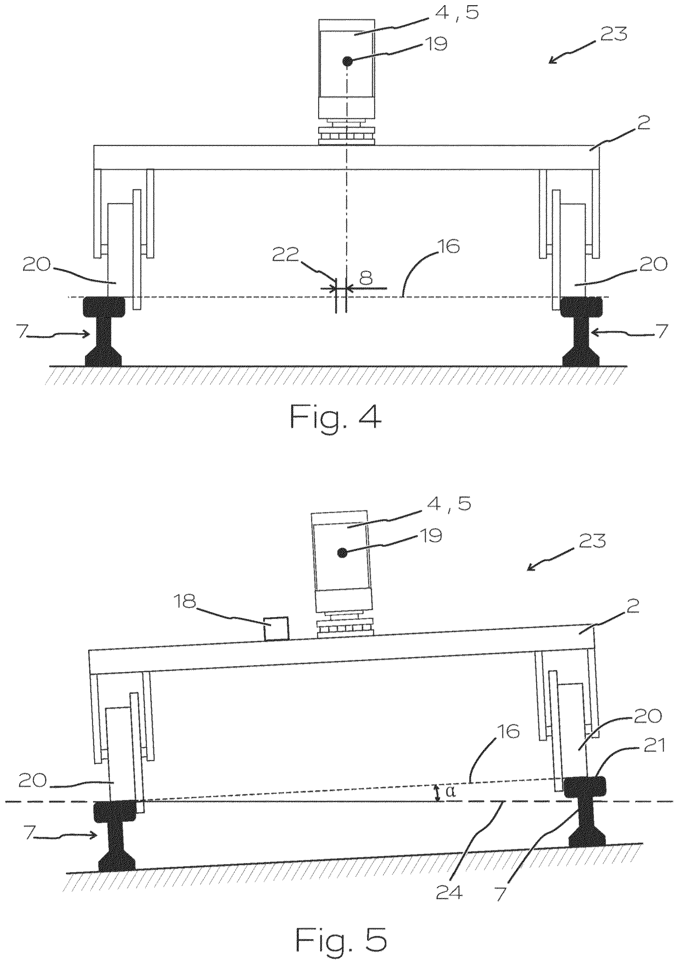

Der Seitenversatz 8 ist der Abstand zwischen der Schienenmitte 22 und dem Schnittpunkt der Normalen zwischen Schienenebene 16 und dem Aussendepunkt 19 mit der Schienenebene 16. Die Mittenachse 22 der Schienen 7 verläuft orthogonal zur Schienenebene 16. In diesem Ausführungsbeispiel ist der Seitenversatz 8 gleich null und ist daher in Fig. 1 nicht dargestellt. Der Seitenversatz 8 wird nachfolgend in Verbindung mit dem zweiten Ausführungsbeispiel in Fig. 4 im Detail erläutert.

Der Höhenversatz 9 ist der Normalabstand zwischen dem Aussendepunkt 19 und der Schienenebene 16.

Nach Berechnung von Seitenversatz 8 und Höhenversatz 9 kann der Fahrdrahtversatz 10 bestimmt werden. Der Fahrdrahtversatz 10 ist der Abstand der Normalen zwischen dem Fahrdraht 1 und der Schienenebene 16 zur Schienenmitte 22. Üblicherweise wird dieser Wert um den Seitenversatz 8 korrigiert, was in diesem Fall jedoch aufgrund des fehlenden Seitenversatzes 8 nicht erforderlich ist.

Ferner kann die Fahrdrahthöhe 11 bestimmt werden. Die Fahrdrahthöhe 11 ist der Normalabstand zwischen Schienenebene 16 und Fahrdraht 1 und kann aus dem Abstand zwischen Aussendepunkt 19 und dem Fahrdraht 1, der Position des Fahrdrahts 1 und dem Höhenversatz 9 der Messvorrichtung 2 berechnet werden.

Wird die Messvorrichtung 2 kontinuierlich in einer Vorschubrichtung 12 über die Schienen 7 bewegt, kann ein Verlaufsprofil von Fahrdrahtversatz 10 und Fahrdrahthöhe 11 ermittelt werden.

Die Empfangseinrichtung 5 kann ferner zur Ermittlung der Position weiterer Konstruktionselemente 13 entlang der Schienen 7 verwendet werden. Beispielsweise kann die Position des in Fig. 1 dargestellten Tragmasts 14 ermittelt werden.

Der Fahrdraht 1 weist einen Horizontalabstand 17 zu den Konstruktionselementen 13 auf.

Der Schienenabstand 27 ist der Abstand zwischen den beiden Schienen 7.

Fig. 4 zeigt eine Detailansicht einer Messvorrichtung 2 gemäß einem zweiten Ausführungsbeispiel mit Seitenversatz 8. In Fig. 4 ist der Abstand zwischen den Rädern 20 des Messwagens 23 kleiner als der Abstand zwischen den beiden Schienen 7. Dadurch kommt es zu einem Seitenversatz 8, der wie im ersten Ausführungsbeispiel oben beschrieben ermittelt werden kann. Der Seitenversatz 8 ist der Abstand des Schnittpunkts der Normalen zwischen Schienenebene 16 und Aussendepunkt 19 mit der Schienenebene 16 zur Schienenmitte 22. Der Seitenversatz 8 kann gegebenenfalls entlang des Verlaufs der Schienen 7 variieren.

Fig. 5 zeigt eine Detailansicht einer Messvorrichtung 2 gemäß einem dritten Ausführungsbeispiel mit Neigung α der Schienenebene 16. Dieser Schienenabschnitt kann sich beispielsweise in einer Kurve befinden, in der die Schienen 7 überhöht angeordnet sind. Die Messvorrichtung 2 umfasst zusätzlich einen Neigungssensor 18, der dazu ausgebildet ist, die Neigung α der Messvorrichtung 2 bzw. des Messwagens 23 zu messen. Die Neigung α wird relativ zur Horizontalebene 24 bestimmt.

Die Neigung α kann von der Datenverarbeitungsanlage verarbeitet und als Korrekturfaktor verwendet werden. Beispielsweise kann aus Fahrdrahthöhe 11 und Neigung α die Höhe des Fahrdrahtes über dem Boden ermittelt werden.

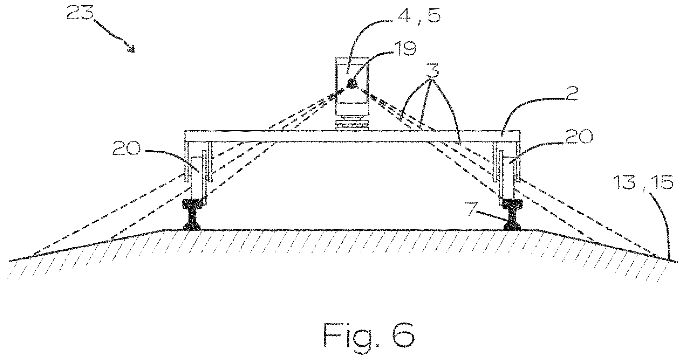

Fig. 6 zeigt eine Detailansicht einer Messvorrichtung 2 gemäß einem vierten Ausführungsbeispiel mit zusätzlicher Erfassung des Profils 15 eines Bahndamms.

In allen hier beschriebenen Ausführungsbeispielen ist die erfindungsgemäße Messvorrichtung 2 auf einem Messwagen 23 angeordnet. In alternativen Ausführungsbeispielen können die hier beschriebenen Ausführungsformen der Messvorrichtung 2 auf einem bestehenden Schienenfahrzeug, beispielsweise einem Triebwagen, angeordnet sein.

In einem nicht gezeigten Ausführungsbeispiel kann die Datenverarbeitungsanlage entfernt von der Messvorrichtung 2 angeordnet sein. In diesem Fall kann eine Datenübertragungseinrichtung vorgesehen sein, die die erfassten Daten an die Datenverarbeitungsanlage übertragt. Die Übertragung kann mit herkömmlichen Datenübertragungsprotokollen, beispielsweise in kabelloser Form, erfolgen.

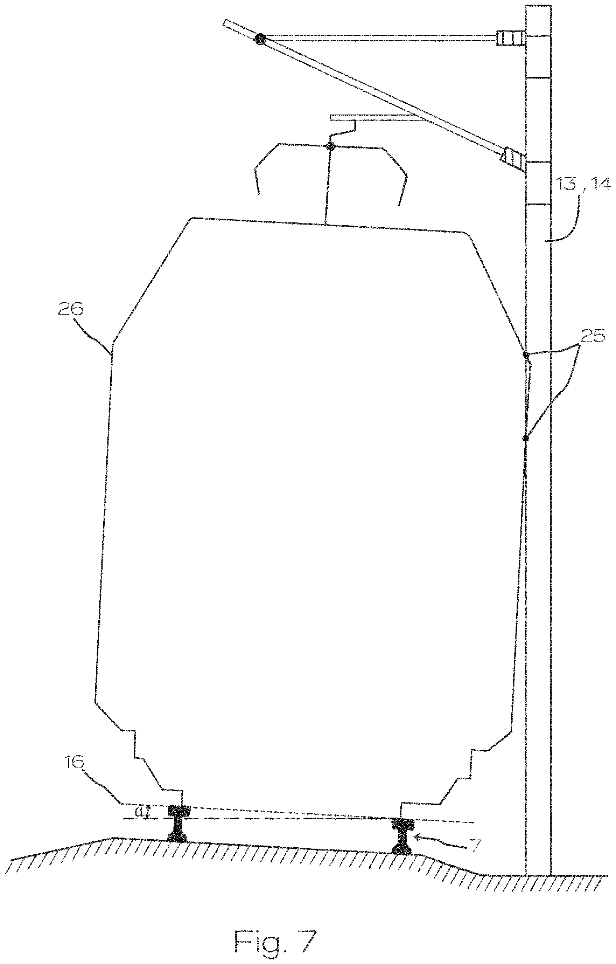

Fig. 7 zeigt eine schematische Ansicht eines Schienenabschnitts mit einem Fahrzeugprofil 26. Mittels der Datenverarbeitungseinrichtung werden in diesem fünften Ausführungsbeispiel auf Basis der zuvor bestimmten Parameter Neigung α und Seitenversatz Kollisionspunkte 25 mit einem Konstruktionselement 13, in diesem Beispiel ein Tragmast 14, bei einem festgelegten Fahrzeugprofil 26 bestimmt.

Als Fahrzeugprofil 26 können unterschiedliche Fahrzeugprofile 26 herangezogen werden, beispielsweise in Fahrzeug-Normprofil.

### Bezugszeichenliste

- 1: Fahrdraht
- 2: Messvorrichtung
- 3: Laserstrahl
- 4: Sendeeinrichtung
- 5: Empfangseinrichtung
- 6', 6": Schienenmesspunkt
- 7: Schiene
- 8: Seitenversatz
- 9: Höhenversatz
- 10: Fahrdrahtversatz
- 11: Fahrdrahthöhe
- 12: Vorschubrichtung
- 13: Konstruktionselement
- 14: Tragmast
- 15: Profil
- 16: Schienenebene
- 17: Horizontalabstand
- 18: Neigungssensor
- 19: Aussendepunkt
- 20: Rad
- 21: Schienenkopf
- 22: Schienenmitte
- 23: Messwagen
- 24: Horizontalebene
- 25: Kollisionspunkt
- 26: Fahrzeugprofil
- 27: Schienenabstand

- α: Neigungswinkel

## Patentansprüche

1. **Verfahren** zum Ermitteln der Lage eines Fahrdrahts (1) für Schienenfahrzeuge mit einer schienengeführten Messvorrichtung (2), umfassend:
- Aussenden eines Laserstrahls (3) von einem Aussendepunkt (19) einer Sendeeinrichtung (4),
- Messen der Reflexion des Laserstrahls (3) mit einer Empfangseinrichtung (5) und dadurch Erfassen einer Position des Fahrdrahts (1) sowie einer Position von wenigstens zwei Schienenmesspunkten (6', 6") auf gegenüberliegenden Schienen (7),
- Einspeisen der erfassten Positionen in eine Datenverarbeitungsanlage und Ermitteln des Seitenversatzes (8) und/oder des Höhenversatzes (9) der Messvorrichtung (2) auf Basis der Position der Schienenmesspunkte (6', 6") und
- Berechnen mittels der Datenverarbeitungsanlage des Fahrdrahtversatzes (10) und/oder der Fahrdrahthöhe (11) unter Verwendung des Seitenversatzes (8) und/oder des Höhenversatzes (9)
**dadurch gekennzeichnet, dass** die Messvorrichtung (2) mit einer Vorschubgeschwindigkeit über die Schienen (6) bewegt wird, und dass die Verfahrensschritte kontinuierlich durchgeführt und wiederholt werden, sodass ein Verlauf des Fahrdrahtversatzes (10) und/oder der Fahrdrahthöhe (11) entlang der Vorschubrichtung (12) erhalten wird, und dass die Sendeeinrichtung (4) einen Laserstrahl (3) aussendet, der um eine entlang der Vorschubrichtung (12) verlaufende Achse rotiert, wobei die Ausbreitungsrichtung des Laserstrahls (3) im Wesentlichen orthogonal zur Vorschubrichtung (12) verläuft.

2. Verfahren nach Anspruch 1, **dadurch gekennzeichnet, dass** durch das Messen der Reflexion des Laserstrahls (3) mit der Empfangseinrichtung (5) ferner eines oder mehrere der folgenden Konstruktionselemente (13) erfasst wird/werden:
• eine Stützeinrichtung des Fahrdrahts (1), beispielsweise ein Tragmast (14) des Fahrdrahts (1),
• eine Wand einer baulichen Einrichtung, beispielsweise eine Tunnelwand,
• ein Schienenfundament, beispielsweise das Profil (15) eines Bahndamms.

3. Verfahren nach Anspruch 2, **dadurch gekennzeichnet, dass** mittels der Datenverarbeitungsanlage der Abstand zwischen dem Konstruktionselement (13) und dem Fahrdraht (1) bestimmt wird.

4. Verfahren nach Anspruch 3, **dadurch gekennzeichnet, dass** der Abstand zwischen dem Konstruktionselement (13) und dem Fahrdraht (1) der Horizontalabstand (17) zwischen dem Konstruktionselement (13) und dem Fahrdraht (1) ist.

5. Verfahren nach Anspruch 3 oder 4, **dadurch gekennzeichnet, dass** der Abstand zwischen dem Konstruktionselement (13) und dem Fahrdraht (1)
- ein Abstand zwischen einem Tragmast (14) und dem Fahrdraht ist, oder
- ein Abstand zwischen einer Tunnelwand und den Fahrdraht ist.

6. Verfahren nach einem der Ansprüche 1 bis 5, **dadurch gekennzeichnet, dass** auf Basis der Position der zwei Schienenmesspunkte (6', 6") mittels der Datenverarbeitungsanlage ein Schienenabstand (27) bestimmt wird, und dass der Schienenabstand (27) mittels der Datenverarbeitungsanlage gegebenenfalls mit einem Soll-Schienenabstand verglichen wird.

7. Verfahren nach einem der Ansprüche 1 bis 6, **dadurch gekennzeichnet, dass** das Verfahren ferner das Bestimmen der Neigung (α) der Schienenebene (16) durch Messen der Neigung der Messvorrichtung (2) gegenüber einer Horizontalebene (24) umfasst, wobei gegebenenfalls die gemessene Neigung (α) der Schienenebene (16) zum Berechnen des Horizontalabstands (17) zwischen dem Fahrdraht (1) und einem Konstruktionselement (13) verwendet wird.

8. Verfahren nach einem der Ansprüche 1 bis 7, **dadurch gekennzeichnet, dass** zum Berechnen des Fahrdrahtversatzes (10) der Abstand des Schnittpunkts der Normalen zwischen Fahrdraht (1) und einer Schienenebene (16) und einer Schienenmitte (22), gegebenenfalls korrigiert um den Seitenversatz (8) der Messvorrichtung (2) bestimmt wird, und/oder dass zum Berechnen der Fahrdrahthöhe (11) der Normalabstand zwischen dem Fahrdraht (1) und einer Schienenebene (16), gegebenenfalls korrigiert um den Höhenversatz (9) der Messvorrichtung (2), bestimmt wird.

9. Verfahren nach einem der Ansprüche 1 bis 8, **dadurch gekennzeichnet, dass** mehrere, gegebenenfalls zwischen 2 und 20, nebeneinander liegende Messpunkte gemittelt werden.

10. Verfahren nach einem der Ansprüche 2 bis 9, **dadurch gekennzeichnet, dass** durch die Datenverarbeitungsanlage aus dem Seitenversatz (8) und gegebenenfalls der Neigung (α) ein Kollisionspunkt (25) zwischen einem erfassten Konstruktionselement (13) und einem Fahrzeugprofil (26) ermittelt wird.

11. **Messvorrichtung** (2) zum Ermitteln der Lage eines Fahrdrahts (1) für Schienenfahrzeuge, wobei die Messvorrichtung (2) schienengeführt ist und umfasst:
- eine Sendeeinrichtung (4) ausgebildet zum Aussenden eines Laserstrahls (3) ausgehend von einem Aussendepunkt (19),
- eine Empfangseinrichtung (5) ausgebildet zum Messen der Reflexion des Laserstrahls (3) und zum Erfassen einer Position des Fahrdrahts (1) sowie zum Erfassen einer Position von wenigstens zwei Schienenmesspunkten (6', 6") auf gegenüberliegenden Schienen (7),
- eine Datenverarbeitungsanlage ausgebildet zum Empfangen der erfassten Positionen sowie zum Ermitteln des Seitenversatzes (8) und/oder des Höhenversatzes (9) der Messvorrichtung (2) auf Basis der Position der Schienenmesspunkte (6', 6"), und zum Berechnen des Fahrdrahtversatzes (10) und/oder der Fahrdrahthöhe (11) unter Verwendung des Seitenversatzes (8) und/oder des Höhenversatzes (9)
**dadurch gekennzeichnet, dass** die Messvorrichtung (2) ausgebildet ist, mit einer Vorschubgeschwindigkeit über die Schienen (6) bewegt zu werden, und die Verfahrensschritte kontinuierlich durchzuführen und zu wiederholen, sodass ein Verlauf des Fahrdrahtversatzes (10) und/oder der Fahrdrahthöhe (11) entlang der Vorschubrichtung (12) erhalten wird, und dass die Sendeeinrichtung (4) eine Laserquelle umfasst,
die dazu ausgebildet ist, einen rotierenden Laserstrahl (3) auszusenden, wobei die Ausbreitungsrichtung des Laserstrahls (3) im Wesentlichen orthogonal zur Rotationsachse verläuft.

12. Messvorrichtung nach Anspruch 11, **dadurch gekennzeichnet, dass** die Vorrichtung ferner einen Neigungssensor (18) umfasst.

13. Messwagen (23) oder Schienenfahrzeug umfassend eine Messvorrichtung zur Ausführung eines Verfahrens nach einem der Ansprüche 1 bis 10 und/oder eine Messvorrichtung nach einem der Ansprüche 11 oder 12.

## Claims

1. **A method** for determining the location of a contact wire (1) for rail vehicles with a rail-guided measuring device (2), comprising the following steps:
- emitting a laser beam (3) from an emission point (19) of a transmitting device (4),
- measuring the reflection of the laser beam (3) with a receiving device (5) and thereby detecting a position of the contact wire (1) and a position of at least two rail measuring points (6', 6") on opposing rails (7),
- feeding the detected positions into a data processing system and determining the lateral offset (8) and/or the height offset (9) of the measuring device (2) based on the position of the rail measuring points (6', 6"), and
- calculating of the contact wire offset (10) and/or the contact wire height (11) using the lateral offset (8) and/or the height offset (9) by means of the data processing system
**characterised in that** the measuring device (2) is moved over the rails (6) at a feed rate, and **in that** the method steps are carried out and repeated continuously, such that a progression of the contact wire offset (10) and/or the contact wire height (11) along the feed direction (12) is obtained, and **in that** the transmitting device (4) emits a laser beam (3) which rotates about an axis extending along the feed direction (12), wherein the direction of propagation of the laser beam (3) extends substantially orthogonally to the feed direction (12).

2. The method according to claim 1, **characterised in that** by measuring the reflection of the laser beam (3) with the receiving device (5), one or more of the following structural elements (13) is/are also detected:
• a supporting device for the contact wire (1), e.g. a support pole (14) for the contact wire (1),
• a wall of a building structure, for example a tunnel wall,
• a rail foundation, for example the profile (15) of a railway embankment.

3. The method according to claim 2, **characterised in that** the distance between the structural element (13) and the contact wire (1) is determined by means of the data processing system.

4. The method according to claim 3, **characterised in that** the distance between the structural element (13) and the contact wire (1) is the horizontal distance (17) between the structural element (13) and the contact wire (1).

5. The method according to claim 3 or 4, **characterised in that** the distance between the structural element (13) and the contact wire (1)
- is a distance between a support pole (14) and the contact wire, or
- is a distance between a tunnel wall and the contact wire.

6. The method according to one of claims 1 to 5, **characterised in that** a rail spacing (27) is determined based on the position of the two rail measuring points (6', 6") by means of the data processing system, and **in that** the rail spacing (27) is optionally compared to a target rail spacing by means of the data processing system.

7. The method according to one of claims 1 to 6, **characterised in that** the method further comprises determining the inclination (α) of the rail plane (16) by measuring the inclination of the measuring device (2) relative to a horizontal plane (24), wherein, optionally the measured inclination (α) of the rail plane (16) is used to calculate the horizontal distance (17) between the contact wire (1) and a structural element (13).

8. The method according to one of claims 1 to 7, **characterised in that** for calculating the contact wire offset (10), the distance of the intersection of the normal between the contact wire (1) and a rail plane (16) and a rail centre (22), optionally adjusted by the lateral offset (8) of the measuring device (2), is determined, and/or **in that** for calculating the contact wire height (11), the normal distance between the contact wire (1) and a rail plane (16), optionally corrected by the height offset (9) of the measuring device (2), is determined.

9. The method according to one of claims 1 to 8, **characterised in that** a plurality adjacent measuring points, optionally between 2 and 20, are averaged.

10. The method according to one of claims 2 to 9, **characterised in that** a collision point (25) between a detected structural element (13) and a vehicle profile (26) is determined by the data processing system from the lateral offset (8) and, optionally, the inclination (α).

11. A measuring device (2) for determining the location of a contact wire (1) for rail vehicles, wherein the measuring device (2) is rail-guided and comprises:
- a transmitting device (4) designed for emitting a laser beam (3) from an emission point (19),
- a receiving device (5) designed for measuring the reflection of the laser beam (3) and for detecting a position of the contact wire (1) and for detecting a position of at least two rail measuring points (6', 6') on opposite rails (7),
- a data processing system designed for receiving the detected positions and for determining the lateral offset (8) and/or the height offset (9) of the measuring device (2) based on the position of the rail measuring points (6', 6"), and for calculating the contact wire offset (10) and/or the contact wire height (11) using the lateral offset (8) and/or the height offset (9)
**characterised in that** the measuring device (2) is designed to be moved along the rails (6) at a feed rate and to carry out and repeat the method steps continuously such that a progression of the contact wire offset (10) and/or the contact wire height (11) along the feed direction (12) is obtained, and **in that** the transmitting device (4) comprises a laser source which is designed for emitting a rotating laser beam (3), wherein the direction of propagation of the laser beam (3) extends substantially orthogonally to the axis of rotation.

12. The measuring device according to claim 11, **characterised in that** the device further comprises an inclination sensor (18).

13. A measuring trolley (23) or rail vehicle comprising a measuring device for executing a method according to any one of claims 1 to 10 and/or a measuring device according to any one of claims 11 or 12.

## Revendications

1. **Procédé** pour déterminer la position d'un fil de caténaire (1) pour véhicules ferroviaires avec un dispositif de mesure (2) guidé sur le rail, comprenant :
- l'émission d'un faisceau laser (3) à partir d'un point d'émission (19) d'un dispositif d'émission (4),
- la mesure de la réflexion du faisceau laser (3) avec un dispositif de réception (5) et la détection ainsi d'une position du fil de caténaire (1) ainsi que d'une position d'au moins deux points de mesure de rail (6', 6") sur des rails opposés (7),
- l'introduction des positions saisies dans une installation de traitement de données et la détermination du décalage latéral (8) et/ou du décalage en hauteur (9) du dispositif de mesure (2) sur la base de la position des points de mesure de rail (6', 6") et
- le calcul, au moyen de l'installation de traitement de données, du décalage du fil de caténaire (10) et/ou de la hauteur du fil de caténaire (11) en utilisant le décalage latéral (8) et/ou le décalage en hauteur (9)
**caractérisé en ce que** le dispositif de mesure (2) est déplacé sur les rails (6) à une vitesse d'avance, et **en ce que** les étapes du procédé sont exécutées et répétées en continu, de sorte qu'une courbe du décalage du fil de caténaire (10) et/ou de la hauteur du fil de caténaire (11) est obtenue le long de la direction d'avance (12), et **en ce que** le dispositif d'émission (4) émet un faisceau laser (3) qui tourne autour d'un axe s'étendant le long de la direction d'avance (12), la direction de propagation du faisceau laser (3) étant sensiblement orthogonale à la direction d'avance (12).

2. Procédé selon la revendication 1, **caractérisé en ce qu'**en mesurant la réflexion du faisceau laser (3) avec le dispositif de réception (5), un ou plusieurs des éléments de construction suivants (13) est/sont en outre détectés :
• un dispositif de support du fil de caténaire (1), par exemple un mât porteur (14) du fil de caténaire (1),
• une paroi d'une installation de construction, par exemple une paroi de tunnel,
• une fondation de rail, par exemple le profil (15) d'un remblai de chemin de fer.

3. Procédé selon la revendication 2, **caractérisé en ce que** la distance entre l'élément de construction (13) et le fil de caténaire (1) est déterminée au moyen de l'installation de traitement de données.

4. Procédé selon la revendication 3, **caractérisé en ce que** la distance entre l'élément de construction (13) et le fil de caténaire (1) est la distance horizontale (17) entre l'élément de construction (13) et le fil de caténaire (1).

5. Procédé selon la revendication 3 ou 4, **caractérisé en ce que** la distance entre l'élément de construction (13) et le fil de caténaire (1)
- est une distance entre un mât porteur (14) et le fil de caténaire, ou
- est une distance entre une paroi de tunnel et le fil de caténaire.

6. Procédé selon l'une des revendications 1 à 5, **caractérisé en ce que**, sur la base de la position des deux points de mesure de rail (6', 6"), un écartement de rail (27) est déterminé au moyen de l'installation de traitement de données, et **en ce que** l'écartement de rail (27) est éventuellement comparé à un écartement de rail de consigne au moyen de l'installation de traitement de données.

7. Procédé selon l'une des revendications 1 à 6, **caractérisé en ce que** le procédé comprend en outre la détermination de l'inclinaison (α) du plan de rail (16) en mesurant l'inclinaison du dispositif de mesure (2) par rapport à un plan horizontal (24), l'inclinaison mesurée (α) du plan de rail (16) étant éventuellement utilisée pour calculer la distance horizontale (17) entre le fil de caténaire (1) et un élément de construction (13).

8. Procédé selon l'une des revendications 1 à 7, **caractérisé en ce que**, pour calculer le décalage du fil de caténaire (10), on détermine la distance du point d'intersection des normales entre le fil de caténaire (1) et un plan de rail (16) et un milieu de rail (22), éventuellement corrigée par le décalage latéral (8) du dispositif de mesure (2), et/ou **en ce que**, pour calculer la hauteur du fil de caténaire (11), on détermine la distance normale entre le fil de caténaire (1) et un plan de rail (16), éventuellement corrigée par le décalage en hauteur (9) du dispositif de mesure (2).

9. Procédé selon l'une des revendications 1 à 8, **caractérisé en ce que** la moyenne de plusieurs points de mesure, éventuellement entre 2 et 20, situés les uns à côté des autres est faite.

10. Procédé selon l'une des revendications 2 à 9, **caractérisé en ce qu'**un point de collision (25) entre un élément de construction (13) détecté et un profil de véhicule (26) est déterminé par l'installation de traitement de données à partir du décalage latéral (8) et éventuellement de l'inclinaison (α).

11. **Dispositif de mesure** (2) pour déterminer la position d'un fil de caténaire (1) pour véhicules ferroviaires, le dispositif de mesure (2) étant guidé sur le rail et comprenant :
- un dispositif d'émission (4) conçu pour émettre un faisceau laser (3) à partir d'un point d'émission (19),
- un dispositif de réception (5) conçu pour mesurer la réflexion du faisceau laser (3) et pour détecter une position du fil de caténaire (1) ainsi que pour détecter une position d'au moins deux points de mesure de rail (6', 6") sur des rails (7) opposés,
- une installation de traitement de données conçue pour recevoir les positions détectées ainsi que pour déterminer le décalage latéral (8) et/ou le décalage en hauteur (9) du dispositif de mesure (2) sur la base de la position des points de mesure de rail (6', 6"), et pour calculer le décalage de fil de caténaire (10) et/ou la hauteur de fil de caténaire (11) en utilisant le décalage latéral (8) et/ou le décalage en hauteur (9)
**caractérisé en ce que** le dispositif de mesure (2) est conçu pour être déplacé sur les rails (6) à une vitesse d'avance, et pour exécuter et répéter les étapes du procédé en continu, de sorte qu'une courbe du décalage du fil de caténaire (10) et/ou de la hauteur du fil de caténaire (11) est obtenue le long de la direction d'avance (12), et **en ce que** le dispositif d'émission (4) comprend une source laser qui est conçue pour émettre un faisceau laser rotatif (3), la direction de propagation du faisceau laser (3) étant sensiblement orthogonale à l'axe de rotation.

12. Dispositif de mesure selon la revendication 11, **caractérisé en ce que** le dispositif comprend en outre un capteur d'inclinaison (18).

13. Wagon de mesure (23) ou véhicule ferroviaire comprenant un dispositif de mesure pour la mise en oeuvre d'un procédé selon l'une des revendications 1 à 10 et/ou un dispositif de mesure selon l'une des revendications 11 ou 12.
